# EUROPÄISCHE PATENTANMELDUNG

(11) **EP 4 796 280 A1**
(43) Veröffentlichungstag der Anmeldung: **26.08.2026**
(21) Anmeldenummer: 25159424.8
(22) Anmeldetag: 21.02.2025
(51) Int. Cl.: B29C 43/04, B29C 43/34, B29C 43/36, B65D 47/08, B29C 43/08, B29K 105/00, B29C 43/02, B29L 23/20, B29L 31/56

(54) **VERFAHREN UND VORRICHTUNG ZUR HERSTELLUNG EINES VERPACKUNGSTUBENVERSCHLUSSES**

(71) Anmelder: PackSys Global AG, 8630 Rüti (CH)
(72) Erfinder: ALMER, Philippe, 8155 Niederhasli (CH); GUIDARELLI, Sandro, 8630 Rüti (CH); VOLLENWEIDER, Beat, 8623 Wetzikon (CH)
(74) Vertreter: Patent- und Rechtsanwälte Behrmann Wagner PartG mbB

(57) **Zusammenfassung**

Die vorliegende Erfindung betrifft ein Verfahren zur Herstellung eines Verpackungstubenverschlusses, einen mittels des vorgenannten Verfahrens hergestellten Verpackungstubenverschluss, ein Verfahren zur Herstellung einer Verpackungsstube, eine mittels des vorgenannten Verfahrens hergestellte Verpackungsstube sowie eine Vorrichtung zur Durchführung der vorgenannten Verfahren.

## Beschreibung

Die vorliegende Erfindung betrifft ein Verfahren zur Herstellung eines Verpackungstubenverschlusses, einen mittels des vorgenannten Verfahrens hergestellten Verpackungstubenverschluss, ein Verfahren zur Herstellung einer Verpackungsstube, eine mittels des vorgenannten Verfahrens hergestellte Verpackungsstube sowie eine Vorrichtung zur Durchführung der vorgenannten Verfahren.

Verpackungsverschlüsse für Tuben bzw. Verpackungstubenverschlüsse sind aus dem Stand der Technik in verschiedenen Ausgestaltungsformen bekannt und umfassen regelmäßig ein Kappenelement mit einer darin angeordneten Auslassöffnung und einem Schulterbereich. Die bekannten Verpackungsverschlüsse werden üblicherweise mittels Spritzgussverfahren oder Formpressverfahren hergestellt und anschließend an einen Tubenkörper zur Ausbildung einer Verpackungsstube fixiert.

Bei einer Herstellung der Verpackungstubenverschlüsse mittels Formpressenverfahren ist es regelmäßig erforderlich, das Formgebungswerkzeug oder zumindest ein Formteil des Formgebungswerkzeugs zu bewegen. Bei einer solchen Bewegung kann es aufgrund der Trägheit einer auf das Formteil aufgebrachten Materialdosis, aus welcher der Verpackungstubenverschluss ausgebildet wird, zu einem Ablösen und sogar Herunterfallen der Materialdosis von dem Formteil kommen.

Ausgehend von dem vorbekannten Stand der Technik stellt sich die vorliegende Erfindung die Aufgabe, ein verbessertes Verfahren zur Herstellung eines Verpackungstubenverschlusses bereitzustellen, welches insbesondere eine hinsichtlich der Verfahrensführung optimierte Fertigung eines Verpackungsverschlusses ermöglicht. Ferner ist es Aufgabe der vorliegenden Erfindung einen mittels des vorgenannten Verfahrens hergestellten Verpackungstubenverschluss, ein Verfahren zur Herstellung einer Verpackungsstube, eine mit dem vorgenannten Verfahren hergestellte Verpackungsstube sowie eine Vorrichtung zur Durchführung der vorgenannten Verfahren bereitzustellen.

Diese Aufgabe wird durch die Gegenstände der unabhängigen Ansprüche gelöst. Die abhängigen Ansprüche stellen weiter vorteilhafte Ausgestaltungen der Erfindung dar. Vorteilhafte Ausführungsformen sind Gegenstand der nachfolgenden Beschreibung, der Figurenbeschreibung, der Figuren sowie der Unteransprüche. Auch um unnötige Wiederholungen zu vermeiden oder zu minimieren sollen nachfolgend alle bezüglich des Verfahrens offenbarten Merkmale auch als entsprechend bezüglich des Produkts und der Vorrichtung offenbart und beanspruchbar gelten, sowie umgekehrt.

In einem ersten Aspekt betrifft die Erfindung ein Verfahren zur Herstellung eines Verpackungstubenverschlusses, vorzugsweise umfassend oder bestehend aus einem Kappenelement mit Schulterbereich und einem dazu über ein Scharnier bewegliches Deckelelement, welche weiter bevorzugt einstückig ausgebildet sind, aufweisend folgende Schritte:
(a) Bereitstellen eines Formgebungswerkzeugs für ein Formpressverfahren, umfassend ein erstes Formteil und ein zweites Formteil, wobei das erste Formteil an einer ersten Seite mindestens eine Aussparung mit einem darin angeordneten Halteelement für eine in das Formgebungswerkzeug einzubringende Materialdosis (60) umfasst, welches zwischen einer eingefahrenen Position und einer ausgefahrenen Position bewegbar angeordnet ist;
(b) Bewegen, insbesondere Ausfahren, des Halteelements in die ausgefahrene Position;
(c) Auf- und/oder Einbringen einer Materialdosis auf die erste Seite des ersten Formteils;
(d) Bewegen, insbesondere Einfahren, des Pins in die eingefahrene Position;
(e) Formen des Verpackungstubenverschlusses durch Heranführen des zweiten Formteils an das erste Formteil, derart, dass sich die Materialdosis in einer sich zwischen den Formteilen bildenden Kavität verteilt; und
(f) Verfestigen und bevorzugt anschließende Entnahme des geformten Verpackungstubenverschlusses.

Kerngedanke der Erfindung ist es also ein erstes Formteil zu verwenden, das wenigstens eine Aussparung mit einem darin beweglich angeordneten Halteelement für eine in das Formgebungswerkzeug einzubringende Materialdosis (60) umfasst. Durch entsprechendes Bewegen des Halteelements zwischen der eingefahrenen Position und der ausgefahrenen Position ist es somit möglich, die auf das erste Formteil ein- oder aufgebrachte Materialdosis an dem ersten Formteil zu sichern und insbesondere ein Ablösen der Materialdosis von dem ersten Formteil aufgrund der Trägheit der Materialdosis bei einer insbesondere lateralen oder rotatorischen Bewegung des ersten Formteils zu verhindern. Gleichzeitig hat das Halteelement, dadurch, dass dieses vor dem Formen des Verpackungsverschlusses in Schritt (e) in die eingefahrene Position bewegt wird, keinen Einfluss auf das Erscheinungsbild des hergestellten Verpackungsverschlusses.

In einer bevorzugten Ausführungsform umfasst das Halteelement einen sich in einer Axialrichtung der Aussparung erstreckenden Pin mit einer planen und/oder vorzugsweise eine Kontur, insbesondere eine Innenkontur, des ersten Formteils fortsetzenden Stirnfläche. Das Halteelement ist weiter vorteilhaft als im Wesentlichen zylindrisches Halteelement, insbesondere als zylindrischer Pin, ausgebildet, welches bzw. welcher in axialer Aufsicht eine vorzugsweise kreisrunde Kontur aufweist. Alternativ kann das Halteelement beispielsweise eine dreieckige, viereckige, mehreckige, ovale oder elliptisch ausgebildete Kontur in axialer Aufsicht aufweisen.

Die Aussparung im ersten Formteil ist vorzugsweise zu einer Außenkontur des Halteelements korrespondierend ausgebildet. Insbesondere weist diese vorzugsweise in axialer Aufsicht eine Innenkontur auf, welche zur Außenkontur des darin beweglich angeordneten Halteelements korrespondierend ausgebildet ist. In einer bevorzugten Ausführungsform ist die Aussparung eine sich in Axialrichtung erstreckende, zylinderförmige bzw. in Aufsicht kreisrunde Ausnehmung. Die Aussparung durchdringt das Formteil in Axialrichtung vorzugsweise nicht vollständig. Weiter vorteilhaft ist die Aussparung als in Axialrichtung begrenzte Ausnehmung oder Bohrung, beispielsweise in Form einer Sacklochbohrung ausgebildet.

In der eingefahrenen Position ist das Halteelement beispielsweise vollständig in der Aussparung angeordnet, also umfangsseitig vollständig von dem ersten Formteil umgeben. In der ausgefahrenen Position steht das Halteelement vorzugsweise wenigstens teilweise aus der Aussparung hervor. Insbesondere steht das Halteelement in dieser Position vorzugsweise in die Kavität, welche sich zwischen den Formteilten zum Formen des Verpackungstubenverschlusses ausbildet, hervor. Das Halteelement kann also einen Bereich umfassen, der nicht von dem ersten Formteil umgeben ist.

Das Halteelement ist vorzugsweise derart ausgebildet, in der ausgefahrenen Position eine seitliche Anlage und/oder einen Anschlag für die auf dem ersten Formteil anzuordnende bzw. angeordnete Materialdosis bereitzustellen. Insbesondere bildet das Halteelement dabei einen Anschlag oder eine Anlage zur wenigstens teilweisen Einschränkung einer Bewegung der Materialdosis in Querrichtung, d.h. senkrecht zur Axialrichtung des Halteelements, aus.

**In** einer bevorzugten Ausführungsform ist das Halteelement derart ausgebildet, dass in der ausgefahrenen Position eine Seiten- oder Umfangsfläche des Halteelements zu einer Innen- und/oder Außenkontur der Materialdosis benachbart und/oder an dieser anliegend angeordnet, und zwar vorteilhaft derart, dass eine seitliche Bewegungsmöglichkeit der Materialdosis, insbesondere aufgrund einer Bewegung des ersten Formteils, begrenzt oder verhindert wird. Unter seitliche Bewegungsmöglichkeit wird eine mögliche Bewegung in seitlicher Richtung verstanden, d.h. in einer Querrichtung, die orthogonal zu einer Axialrichtung des Halteelements bzw. der Aussparung angeordnet ist. Eine seitliche Bewegung des Formteils kann hierbei insbesondere eine laterale oder rotatorische Bewegung des Formteils, beispielsweise ein Verschwenken bzw. eine Rotation um eine Rotationsachse umfassen, insbesondere nach dem Aufbringen der Materialdosis in Schritt (c).

In einer bevorzugten Ausführungsform wird das Halteelement in Schritt (d) in Richtung eines Bodens der Aussparung bewegt, bis eine Stirnfläche des Halteelements in Querrichtung, d.h. in einer Richtung orthogonal zu einer axialen Längserstreckungsachse des Halteelements, mit einem an das Halteelement angrenzenden Bereich der ersten Seite des ersten Formteils, vorzugsweise mit einer Kontur bzw. Innenkontur des ersten Formteils, fluchtet. Eine Oberfläche bzw. Oberseite des Halteelements kann also in der eingefahrenen Position in derselben Ebene angeordnet sein, in der ein Bereich der ersten Seite des ersten Formteils liegt, welcher zum Halteelement benachbart angeordnet ist. Es ist ebenfalls denkbar, dass die Oberfläche bzw. Oberseite des Halteelements, bevorzugt in der eingefahrenen Position, unterhalb der vorgenannten Ebene angeordnet ist. In einer beispielhaften Ausführungsform wird in Schritt (d) das Halteelement bewegt, bis dieses an einen in der Aussparung vorgesehenen Anschlag zur Anlage gelangt. Der Anschlag verhindert bevorzugt eine weitere Bewegung des Halteelements in die zweite Richtung, also in Richtung eines Bodens der Aussparung, wenn das Halteelement an dem Anschlag anliegt, und bildet demnach ein Stoppelement für das Halteelement.

Das Bewegen des Haltelements in Schritt (b) und/oder in Schritt (d) kann mittels eine Antriebs und/oder mittels mindestens eines Federelements erfolgen. Bei Bewegen des Haltelements mittels mindestens eines Federelements, erfolgt ein Einfedern, d.h. das Bewegen des Haltelements in die eingefahrene Position, bevorzugt beim Erreichen einer definierten Verpresskraft. Nach Entnahme des geformten Verpackungstubenverschlusses in Schritt (f) wird das Haltelement sodann bevorzugt automatisch mittels des Federmittels in die ausgefahrene Position zurückgestellt. Das Ausfahren des Haltelements in die ausgefahrene Position in Schritt (b) kann also automatisch mittels der Rückstellkraft des Federmittels erfolgen.

In einer beispielhaften Ausführungsform wird das Haltelement in dem Schritt (b) in eine erste Richtung, welche bevorzugt einer Längserstreckungsrichtung des Haltelements entspricht, vorzugsweise mittels eines Antriebs, linear bewegt. In Schritt (d) wird das Haltelement beispielsweise in eine der ersten Richtung entgegengesetzte, zweite Richtung, vorzugsweise mittels des Antriebs, linear bewegt. Im Übrigen ist ein Bewegen des Pins bevorzugt ausgeschlossen. In anderen Worten ist das Halteelement bevorzugt ausgebildet, lediglich in einer Linearbewegung, insbesondere entlang der axialen Längserstreckungsrichtung des Halteelements, in der Aussparung bewegt zu werden.

In einer bevorzugten Ausführungsform wird in Schritt (c) die Materialdosis derart auf/in das erste Formteil auf- und/oder eingebracht, dass die Materialdosis in dem Bereich des Halteelements ein Loch bzw. einen freien Raum umfasst und/oder eine Einkerbung aufweist. Das Halteelement ist bevorzugt im Wesentlichen ringförmig oder donutförmig.

Vorzugsweise ist ein das Loch und/oder die Einkerbung definierender Bereich, insbesondere eine Innenkontur der Materialdosis, benachbart zu einer Umfangsfläche des Halteelements angeordnet und/oder umgibt diese wenigstens teilweise. Das sich in der ausgefahrenen Position durch das Loch bzw. durch den freien Raum erstreckende Halteelement bildet dabei vorzugsweise einen Anschlag für die Materialdosis aus, welcher diese insbesondere gegen eine Bewegung in Querrichtung sichert.

Ein das Loch und/oder die Einkerbung definierender Bereich der Materialdosis kann an dem Halteelement zumindest teilweise anliegen. Die Materialdosis kann also derart auf/in das erste Formteil auf- und/oder eingebracht werden, dass sie das Halteelement umfangsseitig zumindest teilweise, bevorzugt vollständig, umschließt. Das Loch und/oder die Einkerbung der Materialdosis kann dabei zentrisch oder nicht-zentrisch bezogen auf das ihn umgebende Material lokalisiert sein. Dies bedeutet, dass die Materialdosis kein Ring sein muss, sondern auch eine andere und/oder über den Umfang variierende Form ausbilden kann. Vorteilhaft kann die ein- und/oder aufgebrachte Materialdosis einen plastifizierten Kunststoff, eine Pulp-Masse, ein reaktives Gemisch, ein selbstpolymerisierendes und/oder selbstvernetzendes System umfassen. In einer bevorzugten Ausführungsform wird in Schritt (c) durch Variation eines Volumens der auf- und/oder eingebrachten Materialdosis eine Dicke des resultierenden Verpackungstubenverschlusses in einer Axialrichtung des Verpackungstubenverschlusses variiert. Die Axialrichtung kann der ersten Richtung entsprechen, in welche das Halteelement in Schritt (b) bewegt wird.

**In** einer beispielhaften Ausführungsform wird in Schritt (e) die Materialdosis derart verteilt, dass das Loch geschlossen und/oder die Einkerbung entfernt, insbesondere geglättet, wird. Das Vorsehen des Lochs und/oder der Einkerbung hat demnach keine Auswirkung auf die Gestalt des hergestellten Verpackungstubenverschlusses.

**In** einer bevorzugten Ausführungsform wird in Schritt (c) die Materialdosis derart auf/in das erste Formteil (B) auf- und/oder eingebracht, dass die Materialdosis eine mit einer seitlichen Anlagefläche oder Umfangsfläche des Halteelements wenigstens teilweise korrespondierende Geometrie, insbesondere Außenkontur, aufweist. Das Halteelement umfasst dabei bevorzugt eine seitliche und weiter bevorzugt konkave Ausnehmung bzw. Anlagefläche, , in der weiter bevorzugt zumindest ein Teil der Materialdosis angeordnet ist bzw. anordenbar ist. Die Materialdosis kann also derart auf/in das erste Formteil auf- und/oder eingebracht werden, dass diese in dem Bereich der seitlichen Ausnehmung an dem Halteelement anliegt oder seitlich benachbart zu diesem angeordnet ist. Bevorzugt erstreckt sich die seitliche Ausnehmung über die gesamte Längserstreckung des Halteelements hinweg oder ist in einem oberen Bereich des Halteelements vorgesehen, welcher insbesondere in der ausgefahrenen Position aus der Aussparung hervorsteht. Das Halteelement bildet dabei vorzugsweise eine seitliche Anlage für die Materialdosis aus, welcher diese insbesondere gegen eine Bewegung in Querrichtung sichert.

In einer vorteilhaften Ausführungsform umfasst das Verfahren, vorzugsweise nach dem Aufbringen der Materialdosis in Schritt (c), weiter bevorzugt zwischen den Schritten (c) du (d), den Schritt, dass das erste Formteil, insbesondere mittels einer Drehvorrichtung, zusammen mit der Materialdosis um eine Rotationsachse bewegt bzw. rotiert wird. Hierbei ist ein Abstand des Halteelements zu der Rotationsachse bevorzugt größer als ein Abstand der Materialdosis zu der Rotationsachse. Dabei kann das Formteil beispielsweise von einer ersten Auftragsposition, in welcher die Materialdosis auf das erste Formteil aufgetragen wird, in eine zweite Formposition, in welcher das erste Formteil zum zweiten Formteil insbesondere axial gegenüberliegend angeordnet ist, bewegt bzw. verschwenkt werden. Übliche Beschleunigungen hierbei können in der Größenordnung von bis zu 100 m/(s2) liegen, wobei sowohl Tangentialkräfte als auch Radialkräfte auftreten können. Die auf dem ersten Formteil aufgebrachte Materialdosis wird dabei durch das erfindungsgemäß vorgesehene Halteelement gegen eine seitliche Bewegung und insbesondere gegen ein Herabfallen vom ersten Formteil gesichert.

In einer bevorzugten Ausführungsform umfasst das erste Formteil mindestens zwei Aussparungen, weiter bevorzugt eine Vielzahl von Aussparungen mit einem jeweils darin beweglich angeordneten Halteelement, wie vorgehend beschrieben. Vorteilhaft kann die Materialdosis in Schritt (c) derart auf/in das erste Formteil auf- und/oder eingebracht werden, dass die Materialdosis zwischen den Halteelementen angeordnet ist. Weiter vorteilhaft ist zumindest eines der Halteelemente weiter von der Rotationsachse der Drehvorrichtung entfernt als die Materialdosis.

In einer bevorzugten Ausführungsform wird in Schritt (e) durch Heranführen des zweiten Formteils an das erste Formteil der Verpackungstubenverschluss derart geformt, dass ein Kappenelement ein Scharnier und ein Deckelelement, bevorzugt einstückig bzw. integral aus der auf- und/oder eingebrachten Materialdosis, ausgebildet werden.

Vorteilhaft kann das Verfestigen des Verpackungstubenverschlusses in Schritt (f) ein Abkühlen des erhitzten Materials, ein Trocknen einer Pulp-Materialportion, ein Vernetzen einer reaktiven Masse und/oder ein Polymerisieren einer reaktiven Masse umfassen.

In einer bevorzugten Ausführungsform wird in Schritt (f) zur Entnahme des geformten Verpackungstubenverschlusses dieser mit Hilfe eines Greifers vom ersten Formteil gezogen, wobei bevorzugt unterstützend gleichzeitig durch einen in dem Halteelement befindlichen Luftkanal derart Luft geblasen wird und/oder das Halteelement derart in die ausgefahrene Position bewegt wird, dass sich der Verpackungstubenverschluss von dem ersten Formteil löst.

Das Halteelement kann ein Teleskoprohr sein oder umfassen, das ein Außenrohr und ein relativ zu dem Außenrohr bewegliches Innenrohr aufweist. Beispielsweise wird das Innenrohr in Schritt (f) aus einer eingefahrenen Position, in welcher das Innenrohr vollständig in dem Außenrohr angeordnet ist, in eine ausgefahrene Position bewegt, in der das Innenrohr aus dem Außenrohr hervorsteht, bevorzugt in Richtung des Verpackungstubenverschlusses. In einer beispielhaften Ausführungsform umfasst das Innenrohr den Luftkanal, wobei bevorzugt Luft durch den Luftkanal geblasen wird, wenn das Innenrohr in der ausgefahrenen Position ist.

In einer bevorzugten Ausführungsform ist das erste Formteil vorzugsweise als ein zusammenhängendes Bauteil ausgebildet, in welchem lediglich die wenigstens eine Aussparung mit dem darin beweglichen Halteelement angeordnet ist. Das zweite Formteil umfasst vorzugsweise wenigstens ein zusammenhängendes, weiter vorteilhaft wenigstens zwei oder mehrere Bauteile. In Schritt e) erfolgt ein Formen des Verpackungstubenverschlusses dabei unter Ausbildung der Kavität zwischen dem ersten, im Wesentlichen einteiligen bzw. zusammenhängenden Formteil und dem zweiten, vorzugsweise mehrteiligen Formteil.

In einem weiteren Aspekt betrifft die Erfindung einen Verpackungstubenverschluss herstellbar mit dem im Vorhergehenden beschriebenen Verfahren.

Vorteilhaft umfasst der Verpackungstubenverschluss ein Kappenelement, bevorzugt mit einem Schulterbereich, und einem dazu über ein Scharnier bewegliches und einstückig mit diesem ausgebildetes Deckelelement. Ein das Scharnier ausbildender Materialsteg erstreckt sich bevorzugt im Wesentlichen in einer Ebene und/oder in einer Erstreckungsrichtung, welche in einer Axialrichtung des Verpackungstubenverschlusses verläuft und/oder angeordnet ist.

In einem weiteren Aspekt betrifft die Erfindung ein Verfahren zur Herstellung einer Verpackungstube mit einem Verpackungstubenverschluss, aufweisend vorzugsweise die Verfahrensschritte des im Vorhergenenden beschriebenen Verfahrens zur Herstellung eines Verpackungstubenverschlusses sowie ein Bereitstellen eines Tubenkörpers zur Verbindung mit dem Verpackungstubenverschluss, vorzugsweise derart, dass wenigstens ein Abschnitt des Tubenkörpers in die Kavität des Formgebungswerkzeugs hineinragt. Bevorzugt wird der Tubenkörper beim Formen des Verpackungstubenverschlusses mit diesem, insbesondere in einem Verfahrensschritt, verbunden.

Der mit dem Verpackungstubenverschluss zu verbindende Tubenkörper kann dabei aus jeglichem, insbesondere flexiblen, Material bzw. Materialien sein. Die Verbindung zwischen diesem und dem Verpackungstubenverschluss wird dabei vorteilhaft durch geeignete Materialwahl der Materialdosis und/oder die Geometrie der Formteile im Verbindungsbereich vorgegeben. Die Kombinationsvielfalt ist hierbei sehr weitreichend. Insbesondere kann der mittels des erfindungsgemäßen Verfahrens mit dem Verpackungstubenverschluss verbindbare Tubenkörper jegliche Ausbildung aufweisen, welche elastisch oder nichtelastisch zusammendrückbar ist und dem Verpackungsinhalt angemessene Barriere-Eigenschaften besitzt.

Vorzugsweise wird vor dem Zusammenführen der Formteile zum Formen des Verpackungstubenverschlusses und des damit verbundenen Tubenkörpers, ein Tubenrohr oder ein dieses ausbildender Materialabschnitt über das erste Formteil geführt, vorzugsweise derart, dass ein Abschnitt, insbesondere ein Randabschnitt des Tubenkörpers während des Formens beim Verpressen der Formteile in die Kavität zur Verbindung mit dem Verpackungstubenverschluss hineinragt.

In einem weiteren Aspekt betrifft die Erfindung eine gemäß dem vorgenannten Verfahren hergestellte Verpackungstube.

Weiter betrifft die Erfindung eine Vorrichtung zur Durchführung des Verfahrens zur Herstellung eines Verpackungstubenverschlusses und/oder einer Verpackungstube wie vorgehend beschrieben, umfassend ein Formgebungswerkzeug für ein Formpressverfahren. Das Formgebungswerkzeug weist wenigstens ein erstes Formteil und ein dazu relativ bewegliches zweites Formteil auf. Das erste Formteil umfasst an einer ersten Seite mindestens eine Aussparung mit einem darin angeordneten Halteelement für eine in das Formgebungswerkzeug einzubringende Materialdosis, welches in der Aussparung zwischen einer eingefahrenen Position und einer ausgefahrenen Position bewegbar angeordnet ist.-

Weitere Vorteile, Merkmale und Einzelheiten der Erfindung werden nachfolgend beispielhaft anhand der schematischen Zeichnungen beschrieben. Diese zeigen in:
- Fig. 1:: eine perspektivische Ansicht eines erfindungsgemäßen Verpackungsstubenverschlusses;
- Fig. 2:: eine Seitenansicht des Verpackungstubenverschlusses gemäß Fig. 1;
- Fig. 3:: eine Schnittansicht des Verpackungstubenverschlusses gemäß Fig. 1;
- Fig. 4:: eine Detailansicht des Bereichs D1 in Fig. 3;
- Fig. 5:: eine Detailansicht des Bereichs D2 in Fig. 3;
- Fig. 6:: eine schematische Schnittansicht des Verpackungstubenverschlusses gemäß Fig. 1 zusammen mit einem Formgebungswerkzeugs zur Durchführung des erfindungsgemäßen Verfahrens;
- Fig. 7:: eine schematisch vereinfachte Schnittansicht des Formgebungswerkzeugs gemäß Fig. 6 zusammen mit einer Materialdosis, wobei das Halteelement des Formgebungswerkzeugs in einer ausgefahrenen Position ist;
- Fig. 8:: eine Fig. 7 entsprechende Ansicht, wobei das Halteelement in einer eingefahrenen Position ist;
- Fig. 9a-c:: eine schematisch vereinfachte Schnittansicht eines weiteren bevorzugten Ausführungsbeispiels des Formgebungswerkzeugs zur Herstellung eines erfindungsgemäßen Verpackungsstubenverschlusses mit dem erfindungsgemäßen Verfahren zusammen mit einer Materialdosis;
- Fig. 10:: eine schematische Draufsicht auf eine seitliche Rotationsbewegung wenigstens eines Teils des Formgebungswerkzeugs während des Herstellungsverfahrens;
- Fig. 11--15:: eine Draufsicht auf weitere bevorzugte Ausführungsbeispiele des Formgebungswerkzeug zusammen mit einer aufgebrachten Materialdosis;
- Fig. 16:: eine schematische Schnittansicht der Materialdosis gemäß Fig. 15;
- Fig. 17,18:: eine Draufsicht auf weitere mögliche Ausführungsformen der aufgebrachten Materialdosis.

Die Darstellungen in den Fig. sind schematisch und vereinfacht dargestellt. Gleiche Elemente oder Merkmale sind mit gleichen Bezugszeichen versehen

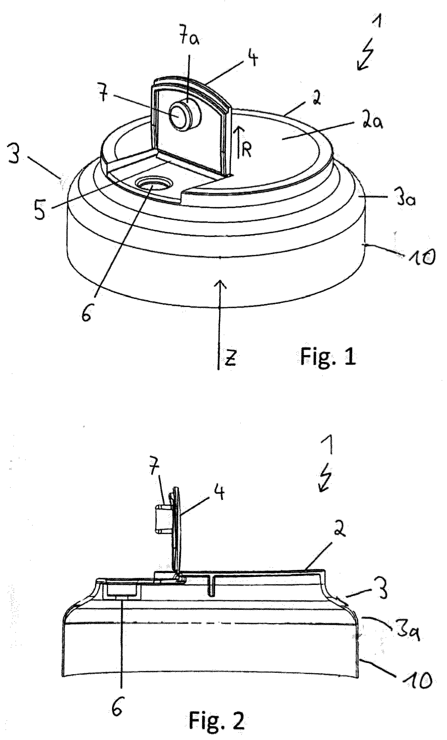

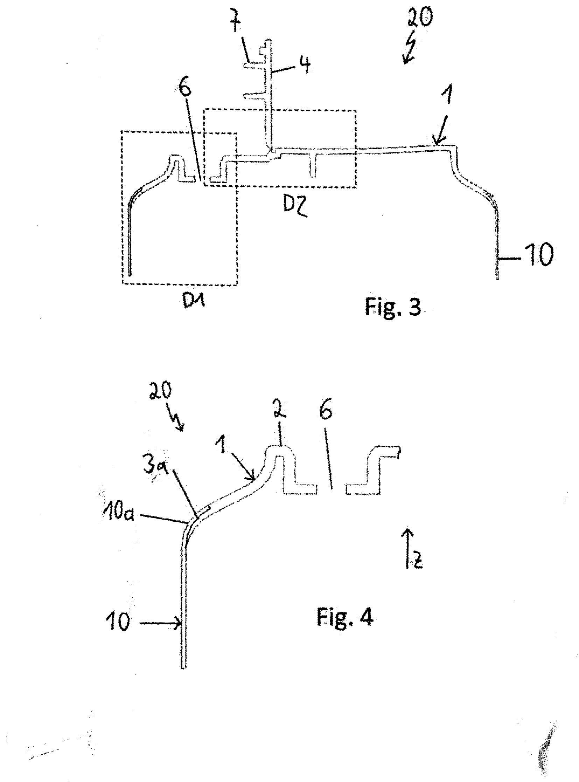

Ein bevorzugtes Ausführungsbeispiel eines erfindungsgemäßen Verpackungsstubenverschlusses 1 und der erfindungsgemäßen Verpackungstube 20, vorzugsweise hergestellt mit den erfindungsgemäßen Verfahren, werden im Folgenenden mit Bezug auf die Fig. 1 bis 5 beschrieben. Die darin gezeigte geometrische bzw. strukturelle Ausbildung des Verpackungstubenverschlusses 1 und der Verpackungstube 20 sind dabei lediglich schematisch und beispielhaft.

Der Verpackungstubenverschluss 1 umfasst ein Kappenelement 2 mit Schulterbereich 3 und einem dazu über ein Scharnier 5 bewegliches Deckelelement 4. Der Verpackungstubenverschluss 1 ist vorzugsweise einstückig ausgebildet.

Das Kappenelement 2 ist als vorzugsweise rundes oder ovales Element ausgebildet und weist einen, vorzugsweise flachen, endseitigen Abschluss- bzw. Kopfbereich 2a und eine darin ausgebildete Auslassöffnung 6 auf. Der Kopfbereich 2a dient dabei als endseitiger Tubenabschluss, wenn der Verpackungstubenverschluss 1 mit einem Tubenkörper 10 verbunden ist.

Der Schulterbereich 3 ist bevorzugt integral bzw. einstückig mit dem Kappenelement 2 ausgebildet und erstreckt sich zu einer vom Kopfbereich 2a abgewandten Seite des Verpackungstubenverschlusses 1. Der Schulterbereich 3 bildet dabei vorzugsweise einen Bereich mit sich in dessen Erstreckungsrichtung vergrößerndem Durchmesser zur Bereitstellung eines Schulterbundabschnitts 3a in an sich bekannter Weise aus. Im Bereich des Schulterbundabschnitts 3a überlappt das obere Ende des Tubenkörpers 10 den Schulterbereich 3 wobei zwischen Schulterbereich 3 und Tubenkörper 10 eine feste Verbindung ausgebildet wird, beispielsweise durch Anschweissen, Adhäsion oder Formschluss.

Das Deckelement 4 umfasst ein sich vorzugsweise senkrecht zu einer Erstreckungsrichtung des Deckelements 4 erstreckendes Verschlusselement 7, vorzugsweise in Form eines vorstehenden Stopfens, weiter vorzugsweise in Form eines vorstehenden Zylinder- oder Rohrabschnitts. Eine Mantelfläche 7a des Verschlusselements 7 ist hierbei vorzugsweise derart ausgebildet, dass diese eine abdichtende Funktion beim Verschließen der Auslassöffnung 6 aufweist. In Offenstellung des Deckelelements 4, in welcher der Verpackungstubenverschluss 1 vorzugsweise auch gefertigt wird, erstreckt sich das Deckelelement 4 in Erstreckungsrichtung R, welche in Axialrichtung Z des Verpackungstubenverschlusses 1 bzw. parallel dazu verläuft.

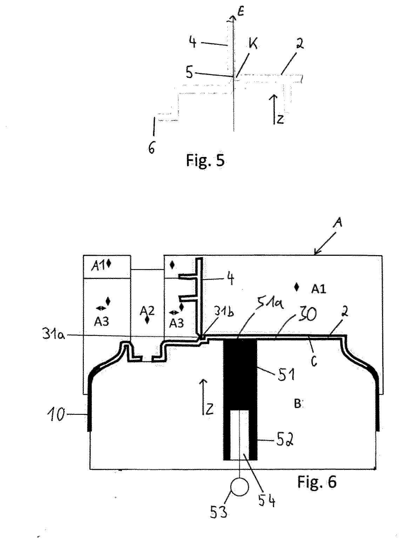

Fig. 5 zeigt eine Detailschnittansicht des Scharniers 5 und des daran anschließenden Deckelelements 4. Das Scharnier 5 wird durch einen geformten Materialsteg des gefertigten Verpackungstubenverschlusses 1 gebildet, welcher sich, insbesondere ausgehend vom Kappenelement 2, vorzugsweise in die Erstreckungsrichtung R erstreckt, die in Axialrichtung Z des Verpackungstubenverschlusses 1 verläuft oder angeordnet ist. Das Scharnier 5 kann hierbei wenigstens teilweise als sich im Wesentlichen linear erstreckender Materialsteg ausgebildet sein. Weiter vorteilhaft liegt das Scharnier 5 in einer in Richtung der Axialrichtung Z verlaufenden bzw. parallel dazu angeordneten Scharnierebene E. Der das Scharnier ausbildende Materialsteg 5 weist vorzugsweise eine Dicke bzw. Materialstärke auf, welche 10 bis 50%, mehr bevorzugt 10 bis 40%, weiter bevorzugt 10 bis 30% der Dicke bzw. Materialstärke der daran anschließenden Bauteile des Deckelements 4 und/oder Kappenelements 2 beträgt.

Der Verpackungstubenverschluss 1 umfasst weiter vorteilhaft eine sich in Axialrichtung Z erstreckende Aussparung K, welche zwischen dem Deckelelement 4 und dem Kappenelement 2 angeordnet ist und direkt an eine das Scharnier 5 ausbildende Materialverjüngung angrenzt. Die Aussparung K ist hierbei vorzugsweise in Axialrichtung Z bzw. vertikal angeordnet und frei von Hinterschnitten.

Wie insbesondere aus den Fig. 2 bis 4 ersichtlich ist, weist die erfindungsgemäße Verpackungstube 20 den Verpackungstubenverschluss 1 und einen mit dem Verpackungstubenverschluss 1 verbundenen Tubenkörpers 10 auf. Vorzugsweise besteht die Verpackungstube 20 aus dem Verpackungstubenverschluss 1 und dem Tubenkörper 10. Der Tubenkörper 10 kann in an sich bekannter Weise aus einem einzelnen Material gebildet sein. Bevorzugt ist der Tubenkörper 10 aus einem extrudierten Kunststoffrohr oder einem Materialverbund, insbesondere einem Laminat, aufweisend mehrere Materialschichten, geformt. Der Tubenkörper 10 umfasst dabei einen auf den Schulterbundabschnitt 3a angepassten Durchmesser zur Befestigung am Verpackungstubenversschluss 1. Der Tubenkörper 10 weist bevorzugt einen endseitigen Verbindungsabschnitt 10a auf, welcher zur Anlage an und Verbindung mit dem Verpackungstubenverschluss 1, insbesondere an/mit dem Schulterbundabschnitt 3a, ausgebildet ist. Vorzugsweise wird der Tubenkörper 10 an dem Verbindungsabschnitt 10a während des erfindungsgemäßen Verfahrens mit dem Verpackungstubenverschluss 1 verbunden. Das Verbinden des Tubenkörpers 10 mit dem Verpackungstubenverschluss 1 erfolgt bevorzugt in einem einzigen Verfahrensschritt zusammen mit der Herstellung des Verpackungstubenverschlusses 1.

Ein bevorzugtes Ausführungsbeispiel des erfindungsgemäßen Verfahrens wird im Folgenden mit Bezug auf Fig. 6 bis 18 beschrieben. Die Fig. 6 bis 15 zeigen lediglich schematisch vereinfacht mögliche Ausführungsformen eines Formgebungswerkzeugs bzw. eines ersten Formteils B des Formgebungswerkzeugs zur Durchführung des erfindungsgemäßen Verfahrens.

Das in Fig. 6 gezeigte Formgebungswerkzeug ist geeignet zur Ausführung eines Formpressverfahrens und umfasst das erste Formteil B und ein zweites Formteil A. Das erste und das zweite Formteil A, B bilden zwischenliegend eine Kavität C aus. Die Formteile A, B sind relativ zueinander beweglich angeordnet und lassen sich wenigstens in eine Offenstellung und eine Schließstellung (wie in Fig. 6 gezeigt) bringen. Die Formteile A, B können hierbei wenigstens teilweise mehrteilig ausgebildet sein. So besteht das zweite Formteil A vorteilhaft aus den Teilelementen A1, A2, A3, welche beweglich zueinander angeordnet sind. Die Teile A2, A3 können Schieberelemente sein, insbesondere zur Bereitstellung bzw. zum Formen von einzelnen Konturbereichen des Verpackungstubenverschlusses 1. Das Formteil B kann, wie in Figur 6 gezeigt, im Wesentlichen einteilig ausgebildet sein und dabei lediglich ein darin beweglich gelagertes Schieberelement bzw. Halteelement 51 aufweisen. Das erste Formteil B bildet vorzugsweise einen Dorn bzw. eine Patrize aus, um welche der Tubenkörper 10 angeordnet ist. Das erste Formteil B ist bei dem erfindungsgemäßen Verfahren bevorzugt derart positioniert, dass wenigstens der Verbindungsabschnitt 10a in die Kavität C ragt, so dass der Tubenkörper 10 mit dem zu formenden Verpackungstubenverschluss 1 unter Ausbildung des Schulterbundabschnitts 3a verbunden werden kann.

Das erste Formteil B umfasst eine Aussparung 54, in der das Halteelement 51 angeordnet ist. Das Halteelement 51 umfasst vorteilhaft einen sich in einer Axialrichtung Z der Aussparung 54 erstreckenden vorzugsweise zylindrischen Pin mit einer vorzugsweise eine Kontur 70 des ersten Formteils fortsetzenden Stirnfläche 51a.

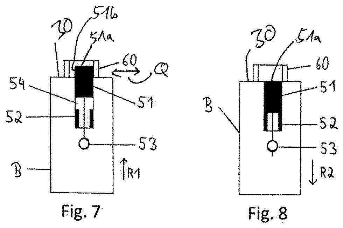

Der Pin 51 ist mittels eines Antriebs 53 aus einer in den Fig. 6 und 8 gezeigten, eingefahrenen Position durch eine Bewegung in eine erste Richtung R1, welche bevorzugt der Axialrichtung Z entspricht, relativ zu dem ersten Formteil B in eine ausgefahrene Position (siehe Fig. 7) bringbar. Durch Bewegen in eine der ersten Richtung R1 entgegengesetzte, zweite Richtung R2, ist der Pin 51 aus der ausgefahrenen Position in die eingefahrene Position überführbar. In der eingefahrenen Position ist der Pin 51 bevorzugt vollständig in der Aussparung 54 angeordnet, insbesondere derart, dass eine Oberfläche 51a des Pins mit dem ersten Formteil B, bevorzugt einer ersten Seite 30 dieses, welche die Aussparung 54 umfasst, eine durchgängige Fläche bildet. Hierbei liegt der Pin 51 bevorzugt an seiner Unterseite, welche einem Boden der Aussparung 54 zugewandt ist, auf einem Anschlag 52 auf. Der Anschlag 52 ist beispielsweise fest mit dem ersten Formteil B verbunden und verhindert ein weiteres Bewegen des Pins 51 in die zweite Richtung R2, also in Richtung des Bodens der Aussparung 54, wenn der Pin 51 in der eingefahrenen Position ist. In der ausgefahrenen Position steht der Pin 51 wenigstens teilweise aus der Aussparung 54 hervor.

Bei dem erfindungsgemäßen Verfahren zur Herstellung eines Verpackungstubenverschlusses 1 wird in einem Schritt (a) das Formgebungswerkzeug für ein Formpressverfahren bereitgestellt. Wenn sich der Pin 51 nicht bereits in der ausgefahrenen Position befindet, wird dieser in einem anschließenden Schritt (b) mittels des Antriebs 53 in die ausgefahrene Position bewegt bzw. ausgefahren. Abweichend von der dargestellten Ausführungsform ist ebenfalls denkbar, anstelle des Antriebs 53 oder zusätzlich zu dem Antrieb 53 ein Federelement, bevorzugt eine Spiralfeder, weiter bevorzugt eine Druckfeder, vorzusehen, wobei der Pin 51 durch die Rückstellkraft des Federelements aus der eingefahrenen in die ausgefahrene Position bewegt wird.

In einem Schritt (c) wird eine Materialdosis 60 auf das erste Formteil B aufgebracht. Die Materialdosis ist beispielsweise aus erhitztem bzw. erwärmtem Kunststoff. Die Materialdosis 60 kann hierbei derart auf das erste Formteil B aufgebracht werden, dass diese den Pin 51 umfangsseitig umschließt, wobei der Pin 51 bevorzugt ein kreisförmiges Profil bzw. eine kreisrunde Kontur in Aufsicht aufweist. Wie aus den Fig. 7, 8, 10, 11, 14 bis 18 ersichtlich ist, kann die Materialdosis 60 die Form eines Rings oder eines Donuts aufweisen. Der Ring ist bevorzugt ein Kreisring oder ein elliptischer Ring. Es ist ebenfalls denkbar, dass eine Außengeometrie des Rings im Profil kreisförmig ist und ein Innenprofil elliptisch oder umgekehrt.

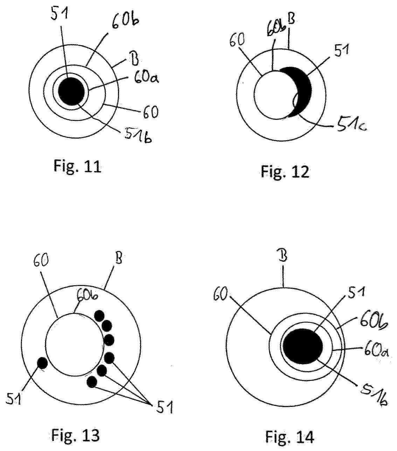

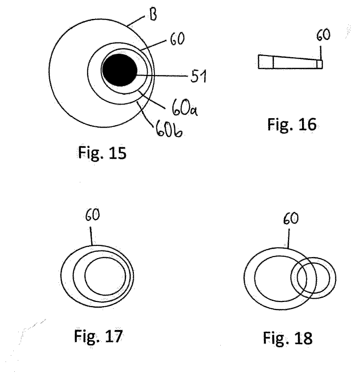

Die Materialdosis 60 kann ebenfalls in Aufsicht eine runde oder ovale Kontur aufweisen, wie beispielsweise in Fig. 13 gezeigt. Weiterhin ist es denkbar, dass die Materialdosis 60, wie in den Fig. 17 und 18 gezeigt ist, aus mehreren Materialteildosen gebildet ist, bevorzugt zwei ineinander angeordneten und/oder sich zumindest teilweise überlagernden Ringen. Die Materialdosis 60 kann durchgehend eine gleiche Dicke aufweisen oder unterschiedlich dick ausgestaltet sein (siehe Fig. 16). Auch kann die Materialdosis 60 eine mit dem Pin 51 wenigstens korrespondierende Geometrie aufweisen (siehe Fig. 12). In diesem Fall umfasst der Pin 51 bevorzugt eine seitliche Ausnehmung 51c, in der zumindest ein Teil der Materialdosis 60 angeordnet sein kann.

Der wenigstens eine Pin 51 ist dabei in der ausgefahrenen Position vorzugsweise derart angeordnet und ausgebildet, dass dieser eine seitliche Anlage und/oder einen Anschlag für die auf dem ersten Formteil B anzuordnende bzw. angeordnete Materialdosis 60 bereitstellt. Insbesondere stellt der Pin 51 dabei einen Anschlag oder eine Anlage zur wenigstens teilweisen Einschränkung einer Bewegung der Materialdosis in Querrichtung Q, d.h. einer Richtung senkrecht zur Axialrichtung Z des Halteelements 51, bereit.

In einer Ausführungsform, in welcher die aufgebrachte Materialdosis ring- bzw. donutförmig ausgebildet ist, vgl. bspw. Fig. 7, 11, 14, ist eine Innenkontur 60a der Materialdosis 60 benachbart zu einer Umfangsfläche 51b des Pins 51 angeordnet, wobei die Umfangsfläche 51b einen seitlichen Anschlag für die Materialdosis 60 ausbildet.

In einer Ausführungsform, in welcher die aufgebrachte Materialdosis 60 wenigstens teilweise korrespondierend zu einer seitlichen Anlage- oder Umfangsfläche 51b des Pins 51 angeordnet ist, vgl. bspw. Fig. 12, ist eine Außenkontur 60b der Materialdosis 60 benachbart zur Anlagefläche 51b, insbesondere zu einer konkaven Ausnehmung 51c des Pins 51 angeordnet. Die konkave Ausnehmung 51c bildet dabei eine seitliche Anlage für die Materialdosis 60a aus.

In einer Ausführungsform, in welcher die aufgebrachte Materialdosis 60 in Aufsicht eine runde oder ovale Ausbildung aufweist, vgl. bspw. Fig. 13, kann das Formteil B eine Mehrzahl von Pins 51 umfassen, welche eine Außenkontur 60b der Materialdosis wenigstens teilweise seitlich umgeben.

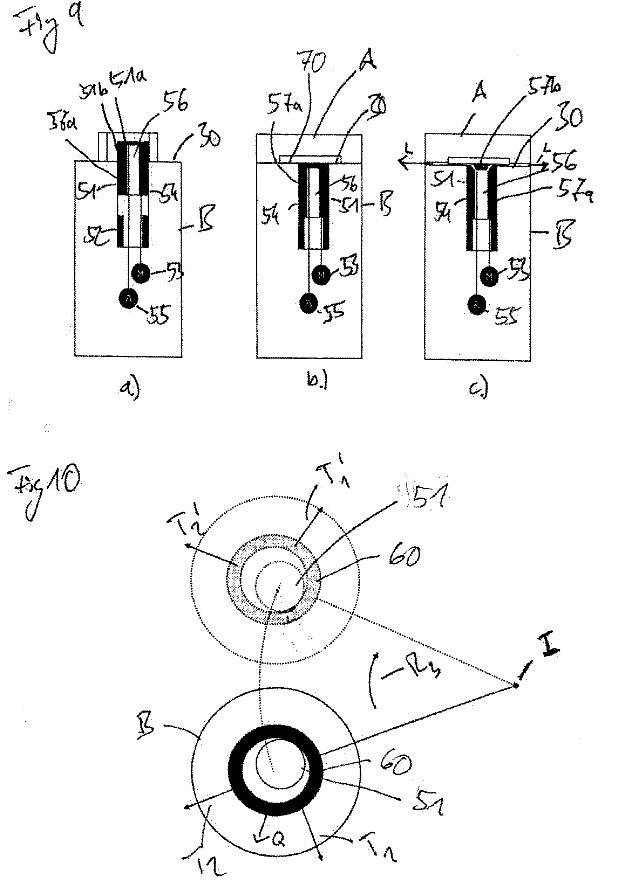

Nachfolgend zum Aufbringen der Materialdosis 60 kann in einem weiteren Schritt eine seitliche Bewegung des Formteils B mit der aufgebrachten Materialdosis 60 erfolgen, wie in Fig. 10 gezeigt. Dies kann insbesondere eine laterale oder rotatorische Bewegung des Formteils B und vorzugsweise eine Rotation um eine Rotationsachse I umfassen. Hierbei wird das Formteil von der unten dargestellten Position in die darüber gestrichelt dargestellte Position verschwenkt, wobei die lediglich schematisch dargestellten Trägheitskräfte T1,T2 und T1', T2' auftreten. Dabei kann das Formteil B beispielsweise von einer ersten Auftragsposition, in welcher die Materialdosis auf das erste Formteil B aufgetragen wird, in eine zweite Formposition, in welcher das erste Formteil B zum zweiten Formteil A insbesondere axial gegenüberliegend angeordnet ist, bewegt bzw. verschwenkt werden. Die auf dem ersten Formteil aufgebrachte Materialdosis 60 wird dabei durch das erfindungsgemäß vorgesehene Halteelement 51 gegen eine seitliche Bewegung Q und insbesondere gegen ein Herabfallen vom ersten Formteil B gesichert.

Nach Auf- und/oder Einbringen der Materialdosis 60 auf bzw. in das erste Formteil B wird der Pin 51 in einem Schritt (d) in die eingefahrene Position bewegt bzw. eingefahren. Dies erfolgt in dem dargestellten Ausführungsbeispiel mittels des Antriebs 53. Es ist ebenfalls denkbar, anstelle des Antriebs 53 oder zusätzlich zu dem Antrieb 53 ein Federelement vorzusehen, das den Pin 51 durch seine Rückstellkraft aus der ausgefahrenen in die eingefahrene Position bewegt. Bei dem Federelement kann es sich um eine Spiralfeder, bevorzugt eine Zugfeder, handeln.

Durch Heranführen des zweiten Formteils A an das erste Formteil B wird in einem Schritt (e) die Materialdosis 60 zu dem Verpackungstubenverschluss 1 geformt. Hierbei wird die Materialdosis 60 in einer sich zwischen den Formteilen A und B bildenden Kavität C verteilt.

Der Verpackungstubenverschluss wird in einem Schritt (f) verfestigt und anschließend aus dem Formpresswerkzeug entnommen.

Fig. 9a-c zeigen eine weitere bevorzugte Ausführungsform des Pins 51, in welcher dieser ein Teleskoprohr umfasst oder dieses ausbildet, aufweisend ein Außenrohr 57a und ein darin beweglich angeordnetes Innenrohr 57b. Hierbei wird in Schritt (b) der Pin 51 in die ausgefahren Position bewegt, wobei das Außenrohr 57a und das Innenrohr 57b zueinander keine relative Bewegung erfahren. Nach dem anschließenden Aufbringen der Materialdosis 60 (vgl. Fig. 9a) wird der Pin 51 in die eingefahrene Position bewegt und das erste und zweite Formteil B,A unter Ausbildung einer Kavität C aufeinander zu bewegt (vgl. Fig. 9b). In dieser Position erfolgt das Formen des Verpackungstubenverschlusses.

In einem weiteren Schritt erfolgt eine Entnahme des Verpackungstubenverschlusses 1 aus dem Formgebungswerkzeug (vgl. Fig. 9c). Hierbei kann das Innenrohr 57b aus einer eingefahrenen Position, in welcher das Innenrohr 57b vollständig in dem Außenrohr 57a angeordnet ist, in eine ausgefahrene Position bewegt werden, in der das Innenrohr 57b aus dem Außenrohr 57a, insbesondere in Richtung des Verpackungstubenverschlusses (1) hervorsteht. Das Innenrohr 57b umfasst dabei einen Luftkanal 56 mit angeschlossener Druckluftversorgung 55, so dass Druckluft mittels des Luftkanals 56 in die Kavität C geblasen werden kann, wodurch sich der Verpackungstubenverschluss 1 von dem ersten Formteil B löst. Der Luftkanal 56 erstreckt sich bevorzugt in Pin-Längsrichtung, welche bevorzugt der Axialrichtung Z entspricht.

Es ist ebenfalls denkbar, dass der Verpackungstubenverschluss 1 von dem ersten Formteil B durch Bewegen des Pins 51 aus der eingefahrenen Position in die ausgefahrene Position, also durch Verschieben des Pins 51 in Axialrichtung Z, gelöst wird.

Zur Herstellung der Verpackungstube 20 wird zusätzlich zu den im Vorhergehenden beschriebenen Schritten der Tubenkörper 10 bereitgestellt. Der Tubenkörper wird derart an dem ersten Formteil B angeordnet, dass ein Abschnitt 10a des Tubenkörpers 10 in die Kavität C des Formgebungswerkzeugs hineinragt. Somit wird der Tubenkörper 10 beim Formen bzw. Herstellen des Verpackungstubenverschlusses 1 mit diesem, vorzugsweise in Schritt (e), automatisch verbunden. Es sind also keine zusätzlichen Schritte zum Verbinden des Tubenkörpers 10 mit dem Verpackungstubenverschlusses 1 erforderlich.

### Bezugszeichenliste

- 1: Verpackungstubenverschluss
- 2: Kappenelement
- 2a: Kopfbereich
- 3: Schulterbereich
- 3a: Schulterbundabschnitt
- 4: Deckelelement
- 5: Scharnier
- 6: Auslassöffnung
- 7: Verschlusselement
- 7a: Mantelfläche Verschluss
- 10: Tubenkörper
- 10a: Verbindungsabschnitt
- 20: Verpackungstube
- 30: erste Seite Formteil
- 51: Halteelement
- 51a: Stirnfläche
- 51b: Umgebungsfläche
- 51c: seitliche Ausnehmung
- 52: Anschlag
- 53: Antrieb
- 54: Aussparung in Formteil
- 55: Druckluftversorgung
- 56: Luftkanal
- 57a: Außenrohr
- 57b: Innenrohr
- 60: Materialdosis
- 60a: Innenkontur
- 60b: Außenkontur
- 70: (Innen)Kontur Formteil B
- A: zweites Formteil
- A1: Teilelemente
- A2: Teilelemente
- A3: Teilelemente
- B: erstes Formteile
- C: Kavität
- E: Scharnierebene
- K: Aussparung in Tubenverschluss
- L: Luftstrom
- R: Erstreckungsrichtung Deckeln, Scharnier
- R1: erste Richtung
- R2: zweite Richtung
- R3: Rotationsbewegung Formteil
- Z: Axialrichtung
- I: Rotationsachse
- Q: Querrichtung

## Patentansprüche

1. Verfahren zur Herstellung eines Verpackungstubenverschlusses (1), aufweisend folgende Schritte:
(a) Bereitstellen eines Formgebungswerkzeugs für ein Formpressverfahren, umfassend ein erstes Formteil (B) und ein zweites Formteil (A), wobei das erste Formteil (B) an einer ersten Seite (30) mindestens eine Aussparung (54) mit einem darin angeordneten Halteelement (51) für eine in das Formgebungswerkzeug einzubringende Materialdosis (60) umfasst, welches in der Aussparung (54) zwischen einer eingefahrenen Position und einer ausgefahrenen Position bewegbar angeordnet ist;
(b) Bewegen des Halteelements (51) in die ausgefahrene Position;
(c) Auf- und/oder Einbringen der Materialdosis (60) auf die erste Seite des ersten Formteils (B);
(d) Bewegen des Halteelements (51) in die eingefahrene Position;
(e) Formen des Verpackungstubenverschlusses (1) durch Heranführen des zweiten Formteils (A) an das erste Formteil (B), derart, dass sich die Materialdosis (60) in einer sich zwischen den Formteilen (A, B) bildenden Kavität (C) verteilt; und
(f) Verfestigen und bevorzugt anschließende Entnahme des geformten Verpackungstubenverschlusses (1).

2. Verfahren nach Anspruch 1, wobei das Halteelement (51) einen vorzugsweise zylindrischen Pin mit einer, eine Kontur (70) des ersten Formteils (B) fortsetzenden Stirnfläche (51a) umfasst.

3. Verfahren nach Anspruch 1 oder 2, wobei das Halteelement (51) ausgebildet ist, in der ausgefahrenen Position eine seitliche Anlage und/oder einen Anschlag für die auf dem ersten Formteil (B) anzuordnende bzw. angeordnete Materialdosis bereitzustellen.

4. Verfahren nach einem der vorhergehenden Ansprüche, wobei in Schritt (d) das Halteelement (51) in die Aussparung (54) bewegt wird, bis eine Stirnfläche (51a) des Halteelements (51) in Querrichtung mit einem an das Halteelement (51) angrenzenden Bereich der ersten Seite (30) des ersten Formteils (B), insbesondere einer Kontur (70) des ersten Formteils (B), fluchtet.

5. Verfahren nach einem der vorhergehenden Ansprüche, wobei das Halteelement (51) mittels eines Antriebs (53) in Schritt (b) in eine erste Richtung (R1) linear bewegt wird und in Schritt (d) in eine der ersten Richtung (R1) entgegengesetzte, zweite Richtung (R2) linear bewegt wird, wobei ein Bewegen des Halteelements (51) im Übrigen bevorzugt ausgeschlossen ist.

6. Verfahren nach einem der vorhergehenden Ansprüche, wobei das erste Formteil (B) zusammen mit der Materialdosis (60), vorzugsweise nach Schritt (c), insbesondere mittels einer Drehvorrichtung, um eine Rotationsachse rotiert wird, wobei vorzugsweise ein Abstand des Halteelements (51) zu der Rotationsachse größer ist als ein Abstand der Materialdosis (60) zur Rotationsachse.

7. Verfahren nach einem der vorhergehenden Ansprüche, wobei in Schritt (c) die Materialdosis (60) derart auf/in das erste Formteil (B) auf- und/oder eingebracht wird, dass die Materialdosis (60) in dem Bereich des Halteelements (51) ein Loch und/oder eine Einkerbung aufweist, wobei ein das Loch und/oder die Einkerbung definierender Bereich, insbesondere eine Innenkontur (60a), der Materialdosis (60) benachbart zu einer Umfangsfläche (51b) des Halteelements (51) angeordnet ist und diese bevorzugt umgibt.

8. Verfahren nach einem der Ansprüche 1 bis 6, wobei in Schritt (c) die Materialdosis (60) derart auf/in das erste Formteil (B) auf- und/oder eingebracht wird, dass die Materialdosis (60) eine mit einer seitlichen Anlagefläche oder Umfangsfläche (51b) des Halteelements (51) wenigstens teilweise korrespondierende Geometrie, insbesondere Außenkontur (60b), aufweist, wobei das Halteelement (51) bevorzugt eine seitliche und vorzugsweise konkave Ausnehmung (51c) umfasst.

9. Verfahren nach einem der vorherigen Ansprüche, wobei das erste Formteil (B) mindestens zwei Aussparungen (54), weiter bevorzugt eine Vielzahl von Aussparungen (54) mit einem jeweils darin beweglich angeordneten Halteelement (51) umfasst, wobei in Schritt (c) die Materialdosis (60) bevorzugt derart auf/in das erste Formteil (B) auf- und/oder eingebracht wird, dass die Materialdosis (60) zwischen den Halteelementen (51) angeordnet ist und/oder wobei zumindest eines der Halteelemente (51) weiter von einer Rotationsachse einer Drehvorrichtung entfernt ist als die Materialdosis (60).

10. Verfahren nach einem der vorhergehenden Ansprüche, wobei in Schritt (d) das Halteelement (51) bewegt wird, bis dieses an einem in der Aussparung (54) vorgesehenen Anschlag (52) zur Anlage gelangt.

11. Verfahren nach einem der vorhergehenden Ansprüche, wobei in Schritt (f) zur Entnahme des geformten Verpackungstubenverschlusses (1) durch einen in dem Halteelement (51) befindlichen Luftkanal derart Luft geblasen wird und/oder das Halteelement (51) derart in die ausgefahrene Position bewegt wird, dass sich der Verpackungstubenverschluss (1) von dem ersten Formteil (B) löst.

12. Verfahren nach einem der vorhergehenden Ansprüche, wobei das Halteelement (51) ein Teleskoprohr ist oder umfasst, das ein Außenrohr und ein Innenrohr aufweist, wobei das Innenrohr in Schritt (f) aus einer eingefahrenen Position, in welcher das Innenrohr vollständig in dem Außenrohr angeordnet ist, in eine ausgefahrene Position bewegt wird, in der das Innenrohr aus dem Außenrohr hervorsteht, insbesondere in Richtung des Verpackungstubenverschlusses (1), welche bevorzugt der ersten Richtung (R1) entspricht, wobei weiter bevorzugt das Innenrohr den Luftkanal aufweist und weiter bevorzugt Luft durch den Luftkanal geblasen wird, wenn das Innenrohr in der ausgefahrenen Position ist.

13. Verpackungstubenverschluss (1) für eine Verpackungstube (20), hergestellt mit dem Verfahren nach einem der Ansprüche 1 bis 12.

14. Verfahren zur Herstellung einer Verpackungstube (20) mit einem Verpackungstubenverschluss (1), umfassend die Schritte des Verfahrens nach einem der Ansprüche 1 bis 12 sowie ein Bereitstellen eines Tubenkörpers (10) zur Verbindung mit dem Verpackungstubenverschluss (1), vorzugsweise derart dass wenigstens ein Abschnitt (10a) des Tubenkörpers (10) in die Kavität (C) des Formgebungswerkzeugs hineinragt, wobei der Tubenkörper (10) beim Formen des Verpackungstubenverschlusses (1) mit diesem, vorzugsweise in einem Verfahrensschritt, verbunden wird.

15. Verpackungstube (20) hergestellt gemäß dem Verfahren nach Anspruch 14.

16. Vorrichtung zur Durchführung des Verfahrens nach einem der Ansprüche 1 bis 12 und/oder 14, aufweisend ein Formgebungswerkzeug für ein Formpressverfahren, umfassend wenigstens ein erstes Formteil (B) und ein dazu relativ bewegliches zweites Formteil (A), wobei das erste Formteil (B) an einer ersten Seite (30) mindestens eine Aussparung (54) umfasst, in der ein Halteelement (51) zwischen einer eingefahrenen Position und einer ausgefahrenen Position bewegbar angeordnet ist.
